**Europäisches Patentamt**

(19) **European Patent Office**

**Office européen des brevets**

(11) Publication number : **0 415 469 B1**

(12) # EUROPEAN PATENT SPECIFICATION

(45) Date of publication of patent specification :
24.11.93 Bulletin 93/47

(51) Int. Cl.⁵ : **C09K 11/86, C09K 11/79, C09K 11/08, C09K 11/02**

(21) Application number : **90202058.5**

(22) Date of filing : **27.07.90**

(54) **Phosphor preparation.**

(30) Priority : **01.09.89 US 401102**

(43) Date of publication of application :
**06.03.91 Bulletin 91/10**

(45) Publication of the grant of the patent :
**24.11.93 Bulletin 93/47**

(84) Designated Contracting States :
**BE DE FR GB IT NL**

(56) References cited :
EP-A- 0 265 983
EP-A- 0 304 121
EP-A- 0 310 308

(56) References cited :
GB-A- 1 151 973
PATENT ABSTRACTS OF JAPAN, vol. 8, no.
260 (C-254), 29th November 1984; & JP-A-59
138 291

(73) Proprietor : **AGFA-GEVAERT naamloze vennootschap**
**Septestraat 27**
**B-2640 Mortsel (BE)**

(72) Inventor : **de Jaeger, Nikolaas Cyriel**
**Hoverheide 35**
**B-2540 Hove (BE)**
Inventor : **McAllister William A.**
**4 Flintlock Run**
**Convent StA., NJ 07961 (US)**

## Description

The present invention relates to a method for the preparation of phosphors, i.e. matter showing luminescence.

Luminescence denotes the absorption of energy in matter and its re-emission as visible or near visible radiation. The initial excitation may be in the form of electromagnetic radiation, e.g. ultraviolet radiation, X-rays, Gamma-rays, particle bombardement, e.g. electrons or neutrons, mechanical strain, chemical reaction or heat (ref. Charles Kittel - Introduction to Solid State Physics - 4th ed. John Wiley & Sons, Inc., New York, p. 634). Crystalline luminescent solids are known as phosphors. The ability of a given material to luminesce with high efficiency is frequently related to activators, which are special impurity atoms present in small proportions.

A particular type of phosphors useful in digital computed radiography utilizing scanning laser beam stimulated luminescence are known as photostimulable phosphors (ref. the journal "Radiology" 148, September 1983, p. 833-838).

From the chemical side most of the phosphors are actually metal halides, oxyhalides, oxides, sulphides, oxysulphides or metal salts of oxy-acids, wherein the metal occupying the major part of the crystal lattice sites reserved for the metal ions is called the host metal and the metal being present in a minor amount in said lattice is called the activator metal which can be brought in electronic excited state and is responsible for the Luminescence or a raise in the efficiency of the luminescence.

Many phosphors contain rare earth metal ions as activator (ref. G. Blasse and A. Bril - Philips Technisch Tijdschrift, (1970), no. 10, p. 314-315). A homogeneous distribution of the activator metal(s) in the crystal lattice by controlling the manufacturing process of the phosphor will be in favour of an improved luminescence.

According to a well known technique (see e.g US-P 3,617,743) applied in the production of an oxyhalide-type phosphor the oxides of a host metal and rare earth activator metal are first dissolved in $HNO_3$ and co-precipitated as oxalates wherefrom by firing an intimate mixture of oxides is formed that on heating in the presence of a flux with a more or less easily decomposable halide such as ammonium bromide is transformed into an oxyhalide. after cooling the phosphor mass is crushed, washed, filtered and dried to obtain phosphor particles of desired size, e.g. for use in X-ray intensifying screens.

In another process described in US-P 4,524,016 for the production of BaFCl:Eu phosphors in the preparation of said phosphor spray drying of a slurry comprising equimolar amounts of $BaCl_2$ and $BaF_2$, europium halide and an additional amount of $BaCl_2$ as flux in a liquid is applied. After spray drying the samples are fired in air.

In some phosphor preparations the use of a flux ingredient improving the mixing of the ingredients in the firing stage is not applied and mixing proceeds by grinding the solid ingredients in dry state. For example, as described in published EP-A 0 254 066, 0 277 646 and 0 304 121 before firing host metal oxides or carbonates are mixed in dry state with activator metal oxide in the presence of finely divided silica and for forming the halosilicates a solid host metal halide is added thereto. The mixing of the dry solids proceeds normally in a mortar, ball mill or pearl mill but cannot yield a very homogeneous distribution of ingredients.

In published EP-A- 0 321 805 a method for producing a phosphor is described which method comprises the steps of:

dissolving lutetium, gadolinium and yttrium oxides and terbium and/or ceriumoxides in diluted nitric acid,
adding tetraethylorthosilicate and alcohol,
forming a gel (containing colloidal silica) by adding an excess of ammonia,
drying the gel by keeping it about 70°C for 3-4 days, and
firing it for several periods at gradually increasing temperature, up to 1400-1600°C.

## Summary of the invention

It is an object of the present invention to provide a method for the production of a silicate or mixed silicate-germanate, halosilicate or mixed halo(silicate-germanate) photostimulable phosphor wherein the mixing of the phosphor ingredients before firing is improved.

Other aspects and objects of the present invention will appear furtheron from the description.

In accordance with the present invention a method for the preparation of a silicate or mixed silicate-germanate, halosilicate or mixed halo(silicate-germanate) phosphor is provided which method comprises the following steps (1) to (8) :

(1) providing an aqueous medium,
(2) adding to said medium a host metal selected from the group consisting of Ca. Sr, Ba, Mg, Cd, Zn and Pb in at least one chemical structure selected from the group consisting of an oxide, hydroxide and a salt that decomposes into the corresponding metal oxide on heating, and when preparing a halosilicate or mixed halo(silicate-germanate) at least partly in the form of a halide,

(3) adding to said medium at least one activator metal in at least one chemical structure selected from the group consisting of a halide, oxide, hydroxide and a salt that decomposes into the corresponding metal oxide on heating, said activator metal doping said phosphor with at least one member selected from the group consisting of $Eu^{2+}$ and $Ce^{3+}$,

(4) adding to said medium colloidal silica in the form of a sol or forming in said aqueous medium a sol,

(5) intimately mixing the ingredients of steps (2), (3) and (4) in said aqueous medium, preferably combining that mixing with a reduction in particle size of the ingredients that are not present as a sol, e.g. by grinding or ultra-sonic treatment,

(6) coagulating the sol including the mixed ingredients to form a gel by lowering the pH,

(7) drying the gel to form a dessicated product called xerogel,

(8) finely dividing the xerogel, and firing said xerogel to obtain a phosphor mass that after cooling is ground to form particulate phosphor material.

Detailed description of the invention

A sol is a colloidal dispersion in a liquid of finely divided solid particles having an average particle size below 0.1 um in a liquid. The particles of a sol may consist of agglomerates of between $10^3$ and $10^9$ atoms, either in the elemental state or in the form of ions or molecules. Sols may exist as lyophobic and lyophilic sols. A lyophobic sol is one wherein the colloidal solid has relatively little affinity for the liquid dispersion medium as in the case of sulphide hydrosols. A lyophilic sol is obtained when the surface of the dispersed particles possesses an appreciable affinity for the solvent, here the water used in step (I) of the present method. For said sols and the preparation thereof reference is made e.g. to W. J. Popiel "Introduction to Colloid Science" - Exposition Press, Hicksville, New York, 1st ed. (1978), p. 145-161.

A gel is obtained by coagulation of a sol on the condition that the colloidal particles have an adequate attraction for the liquid wherein they are present. A gel is a semisolid system with a high liquid content, possessing a certain rigidity but also some elasticity. Gelation may result by cooling, addition of a poor solvent which is freely miscible with the dispersion medium and/or by addition of electrolyte(s). Addition of electrolytes to a concentrated sol may produce a gel if the dispersed substance is sufficiently solvated, as is the case of hydrated alumina. A gel can likewise be formed by chemical reaction, such as the reaction between a strong acid and sodium silicate to produce gelatinous silicic acid. The process whereby a gel shrinks and spontaneously releases liquid is called syneresis. The desiccated product obtained by drying, often highly microporous, is called a xerogel (ref. the same book of W. J. Popiel, p. 161-162).

The term silicate applies to different chemical compounds including anions consisting of silicon and oxygen. Examples thereof are orthosilicate $(SiO_4)^{4-}$, pyrosilicate $(Si_2O_7)^{6-}$, and polysilicate anions such as $(SiO_3)_n^{2n-}$, $(Si_4O_{11})_n^{6n-}$ and $(Si_2O_5)_n^{2n-}$ described in "Inorganic Chemistry - A Textbook for Advanced Students, by E. de Barry Barnett and C.L. Wilson - London Green and Co - London, p. 292-294 (1955).

Examples of silicate phosphors activated with manganese are described in published EP-A 0 254 066 and 0 277 646.

In a particularly preferred embodiment for preparing a halosilicate or mixed halo(silicate-germanate) the pH is lowered in step (6) by addition of a hydrogen halide acid of which the halide ion, e.g. bromide ion from HBr, is allowed to form part of the phosphor structure.

Suitable heat decomposable metal salts for forming host metal and activator metal oxides in the firing stage are carbonates and oxalates.

The drying of the gel in order to obtain a xerogel may proceed in an oven, optionally under reduced pressure conditions, by high free electromagnetic waves produced e.g. by magnetron, or by means of a hot gas stream, e.g. air, applying e.g. spray drying. A suitable drying temperature is in the range of 110 to 140 °C.

Colloidal silica suited for forming a sol and gel transformable in a xerogel in the phosphor preparation method according to the present invention has preferably an average particle size smaller than 70 nm, more preferably smaller than 20 nm and a specific surface area of at least 40 $m^2$ per g, preferably of at least 200 $m^2$ per g, determined according to the BET-value method described by S. Brunauer, P. H. Emmett and E. Teller, J. Amer. Chem. Soc. 60, 309-312 (1938).

Colloidal silica satisfying these requirements is marketed e.g. by Bayer A.G. Bundesrepublik-Germany and Nalco Chemical Co., U.S.A.

According to a special embodiment the colloidal silica is prepared in situ in the phosphor ingredient mixture, e.g. by hydrolysis of a silicate ester, e.g. tetramethyl orthosilicate, in acid medium, using e.g. hydrochloric acid.

Common firing temperatures in phophor preparation are in the range of 400 to 1000 °C.

The firing of the phosphor ingredients in the xerogel state proceeds preferably in two stages; in a first stage in a temperature range of 400-500 °C and in a second stage in a temperature range of 700-800 °C.

The firing proceeds in a reducing gas atmosphere when some of the activator ions have to be reduced to a lower oxidation state, e.g. when $Eu^{3+}$ has to be transformed into $Eu^{2+}$. For example, the firing proceeds under nitrogen containing some hydrogen (0.2 to 5% by volume). During cooling the reducing atmosphere is maintained. For best results the phosphor sample is ground after its cooling and re-fired in the temperature range of 700-800 °C, the said firing proceeding also in nitrogen-hydrogen atmosphere.

When preparing mixed halo(silicate-germanates) the use of $GeO_2$ as starting ingredient lowers the pH of the aqueous sol already to some extent so that less acid is required to obtain the desired gel structure.

An intimate pre-mixing of host metal compound(s) with activator metal compound(s) can proceed by coprecipitating them as carbonates, e.g. forming (Ba,Eu)carbonate before addition in step (2) to the aqueous medium. The coprecipitation proceeds e.g. by introducing carbon dioxide gas in an aqueous solution of the watersoluble metal halide salts.

The method of the present invention is particularly useful for the preparation of photostimulable phosphors described in United States Patent Application Serial No. 07/307,277 and published EPA 0 304 121 corresponding with United States CIP Application Serial No. 085,787.

So, in one embodiment the present method is used for the preparation of a photostimulable phosphor which is a halosilicate containing as host metal at least one member selected from the group consisting of Ca, Sr, Ba, Mg, Cd, Zn and Pb, as halogen at least one member selected from the group consisting of Cl, Br and 1, and as activator (dopant) $Eu^{2+}$ in combination with (a) co-dopant(s) being at least one member selected from the group consisting of La, Y, Sc and the lanthanide elements excluding $Eu^{2+}$ or said co-dopant(s) being sodium and/or potassium.

In an other embodiment the present method is used for the preparation of a photostimulable phosphor which is a halosilicate containing as host metal at least one member selected from the group consisting of Ca, Sr, Ba, Mg, Cd, Zn and Pb, as halogen at least one member selected from the group consisting of Cl, Br and I, and as activator (dopant) $Ce^{3+}$ in combination with (a) co-dopant(s) being at least one member selected from the group consisting of La, Y, Sc and the lanthanide elements excluding $Ce^{3+}$ and terbium or said co-dopant(s) being sodium and/or potassium.

Photostimulable phosphors that are prepared advantageously by the method according to the present invention are within the scope of following empirical formula or a multiple thereof :

$$M_xM'_zSi_yO_{x+2y}X_{2z} : aA', bA''$$

wherein :

M and M' (same or different) are selected from the group consisting of Ca, Sr, Ba, Mg, Cd, Zn and Pb,

X is a member selected from the group consisting of Cl, Br and I or is a mixture of at least two of said elements,

A' represents a member selected from the group consisting of $Eu^{2+}$ and $Ce^{3+}$ or a mixture thereof, A'' represents at least one member selected from the group consisting of La, Y, Sc and the lanthanide elements or represents at least one of sodium and potassium,

x is in the range $3.5 > x > 0.5$,

y is in the range $3.5 > y > 0.5$,

z is in the range $4.5 > z > 0.1$,

a satisfies the following relation : $10^{-4} < a/(x+z+a+b) < 10^{-1}$, and

b satisfies the following relation : $0 \leqq (b/(x+z+a+b) < 5 \times 10^{-2}$.

In a class of preferred photostimulable halosilicate phosphors M and M' correspond to Sr and/or Ba, x = 2, y = 1 and z = 3.

In said class particularly preferred phosphors have one of the following empirical formulae :

$(Sr,Ba)_5SiO_4Cl_6:aA',bA'';$

$(Sr,Ba)_5Si_2O_6Cl_6:aA',bA'';$ $(Sr,Ba)_5SiO_4Br_6:aA',bA'';$

$(Sr,Ba)_5Si_2O_7Cl_4:aA',bA'';$ $(Sr,Ba)_4Si_3O_8Cl_4:aA',bA'',$ and

$(Sr,Ba)_3Si_2O_{7-x/2}Cl_x:aA',bA'',$

wherein :

A' respresents a member selected from the group consisting of $Eu^{2+}$ and $Ce^{3+}$ or a mixture thereof.

A'' represents at least one member selected from the group consisting of La, Y, Sc and the lanthanide elements,

a is the atomic fraction of A' and is in the range $10^{-4}$ to $10^{-1}$, and

b is the atomic fraction of A'' and is in the range 0 to $5 \times 10^{-2}$.

The presence of a mixture of the dopants A' and A'', wherein A' and A'' are different elements and/or have different chemical valency provides a strong photostimulable luminescence after X-ray irradiation. It is assumed that the A'' dopants, so-called co-activators are incorporated on M and M' sites and function as electron traps thereby enhancing the trapping of charge carriers upon X-ray irradiation (excitation).

Preferred photostimulable phosphors include for A'' one or more of gadolinium, yttrium, lanthanum, samarium and lutetium.

In a further embodiment the present method is used for the preparation of a photostimulable phosphor which is a mixed halo(silicate-germanate) containing as host metal barium, as halogen bromine and as dopant $Eu^{2+}$ and/or $Ce^{3+}$ optionally in the presence of at least one codopant (D) being a rare earth metal ion other than $Eu^{2+}$ and $Ce^{3+}$ or being $Na^+$, $K^+$ or $Sr^{2+}$ or a mixture of at least two of said codopants.

Other photostimulable phosphors that are prepared advantageously by the method according to the present invention are within the scope of one of the following empirical formulae (I) or (II) :

(I) $\quad Ba_{5-(n+p)}Ge_vSi_wO_4Br_6:Eu^{2+}_n, D^{m+}_p$

(II) $\quad Ba_{5-(n+p)}Ge_vSi_wO_4Br_6:Ce^{3+}_n, D^{m+}_p$

wherein :

v is larger than zero and equals at most 1, and v+w = 1, preferably v is between 0.4 and 0.9,

n is in the range of 0.005 to 0.10,

p is in the range of 0 to 0.010,

D is at least one codopant selected from the group consisting of $Na^+$, $K^+$, $Sr^{2+}$ and a rare earth metal ion other than $Eu^{2+}$ or $Ce^{3+}$, and

m is 1, 2 or 3.

Preferred photostimulable mixed halo(silicate-germanate) phosphors prepared according to the present invention are within the scope of one of the following empirical formulae :

$$Ba_{5-n}(Ge_vSi_w)O_4Br_6:Eu^{2+}_n$$

$$Ba_{5-n}(Ge_vSi_w)O_4Br_6:Ce^{3+}_n$$

wherein n is in the range from 0.005 to 0.10, v is in the range $0 < v \leqq 1$, and v+w is 1.

To more fully illustrate this invention, the following non-limiting examples are presented.

EXAMPLE 1

8.9141 g of solid barium bromide was dissolved in 9 ml of water, and 3.9490 g of coprecipitated Ba,Eu-carbonate were added to the solution, the atom ratio of Ba/Eu in the carbonate being 0.9925/0.0075.

As tabulated in the Table A at the end of the Examples four sol samples with the indicated silica content were prepared using a 30 % by weight aqueous silica dispersion wherein the silica has an average particle size (A.P.S.) in nm and surface area (S.A.) in $m^2/g$ as indicated in said Table. After mixing for one hour in a pearl-ill a sufficient amount of 10 wt % hydrochloric acid was added to the suspension to lower the pH to 5. The suspension was then stirred for several hours at 65 °C and the liquid allowed to form a gel.

The gel was dried for about 2 hours at 130 °C in a ventilated drying oven, ground and fired at 450 °C for 2 hours, then the temperature was increased to 775 °C and held at that temperature for 2 additional hours. After cooling the phosphor sample was reground and fired again for 2 hours at 775 °C. All firings were carried out in nitrogen-hydrogen atmospheres wherein the volume content of hydrogen was either 5 % or 0.2 %. Finally the phosphor having the following empirical formula : $Ba_{5-n}(Ge_vSi_w)O_4Br_6:Eu_n^{2+}$, wherein n is 0.015, v is 0, and w is 1 was ground to obtain phosphor particles ready for incorporation into a radiographic screen for use in digital computed radiography.

The ground phosphor powder was dispersed in a binder solution containing cellulose acetobutyrate dissolved in methyl ethyl ketone. For forming a photostimulable phosphor screen the dispersion obtained was coated onto a 100 μm thick transparent sheet of polyethylene terephthalate to give a coating weight of 500 g/m2. The thus obtained phosphor screen was used to determine the energy storage characteristics of the phosphor. After erasing any residual stored energy by irradiating with white light filtered to remove the UV-components, the screen was irradiated with a given dose of X-rays and then stimulated with He-Ne laser light (633 nm). In the photodetection almost only the light transmitted by a 5 mm HOYA B 390 filter was recorded. For the obtained results reference is made to Table A.

The conversion efficiency (C.E.1) expressed in $pJ/mm^2/mR$, the conversion efficiency (C.E.2) expressed in $pJ/mm^3/mR$ and stimulation energy (S. E.) expressed in $\mu J/mm^2$ were determined as described in published EP-A 0 304 121.

EXAMPLE 2

Example 1 was repeated with the difference however, that to the same weigths of $BaBr_2$ and Ba/Eu carbonate in 9 ml of water 0.4706 g of $GeO_2$ were added. After mixing and firing as in Example 1, the materials had the given empirical formula wherein n is 0.015, v is 0.45 and w is 0.55. For the obtained results reference is made to Table A.

EXAMPLE 3

Example 1 was repeated with the difference however, that to the same weigths of $BaBr_2$ and Ba/Eu carbonate in 9 ml of water 0.7844 g of $GeO_2$ were added. After mixing and firing as in Example 1, the materials had the given empirical formula wherein n is 0.015, v is 0.25 and w is 0.75. For the obtained results reference is made to Table A.

EXAMPLE 4

8.9141 g of solid barium bromide was dissolved in 9 ml of water, and 3.9490 g of coprecipitated Ba,Eu-carbonate were added to the solution, the atom ratio of Ba/Eu in the carbonate being 0.9925/0.075.

1.65 ml of a 30 % by weight aqueous silica dispersion wherein the silica particles have the tabulated (see Table A) average particle size (A.P.S.) in nm and surface area (S.A.) in $m^2/g$ were introduced to form a sol. After mixing for one hour in a pearl-mill sufficient 10 wt % hydrochloric acid was added to the suspension to lower the pH to 5. The suspension was then stirred for several hours at 65 °C and the liquid allowed to form a gel.

The gel was dried for about 2 hours at 130 °C in a ventilated drying oven, ground and fired at 450 °C for 2 hours, then the temperature was increased to 775 °C and held at that temperature for 2 additional hours. After cooling the phosphor sample was reground and fired again for 2 hours at 775 °C. Both firings were in nitrogen-hydrogen (99.8/0.2 by volume) atmosphere.

Finally the phosphor having the following empirical formula : $Ba_{5-n}(Ge_vSi_w)O_4Br_6:Eu_n^{2+}$, wherein n is 0.015, v is 0, and w is 1 was ground to obtain phosphor particles ready for incorporation into a radiographic screen for use in digital computed radiography. For the obtained results reference is made to Table A.

EXAMPLE 5

Example 4 was repeated but with the type of silica identified under No. 5 in the Table.

After the firings a phosphor having the same empirical formula as in Example 4 was obtained. The obtained phosphor particles were incorporated in a radiographic screen for use in digital computed radiography. For the obtained results reference is made to Table A.

EXAMPLE 6

Example 4 was repeated but with the type of silica identified under No. 6 in the Table.

After the firings a phosphor having the same empirical formula as in Example 4 was obtained. The obtained phosphor particles were incorporated in a radiographic screen for use in digital computed radiography. For the obtained results reference is made to Table A.

EXAMPLE 7

Example 4 was repeated but with the type of silica identified under No. 7 in the Table.

After the firings a phosphor having the same empirical formula as in Example 4 was obtained. The obtained phosphor particles were incorporated in a radiographic screen for use in digital computed radiography. For the obtained results reference is made to Table A.

EXAMPLE 8

Example 4 was repeated but with the type of silica identified under No. 8 in the Table.

After the firings a phosphor having the same empirical formula as in Example 4 was obtained. The obtained phosphor particles were incorporated in a radiographic screen for use in digital computed radiography. For the obtained results reference is made to Table A.

EXAMPLE 9

8.9141 g of solid barium bromide was dissolved in 9 ml of water, and 3.9490 g of coprecipitated Ba,Eu-carbonate were added to the solution, the atom ratio of Ba/Eu in the carbonate being 0.9925/0.0075.

0.1569 g of $GeO_2$ and 1.40 ml of a 14.5 % by weight aqueous silica dispersion wherein the silica particles have the tabulated (see Table A) average particle size (A.P.S.) in nm and surface area (S.A.) in $m^2/g$ were in-

troduced to form a sol. After mixing for one hour in a pearl-mill sufficient 10 wt % hydrochloric acid was added to the suspension to lower the pH to 5. The suspension was than stirred for several hours at 65 °C and the liquid allowed to form a gel.

The gel was dried for about 2 hours at 130 °C in a ventilated drying oven, ground and fired at 450 °C for 2 hours, then the temperature was increased to 775 °C and held at that temperature for 2 additional hours. After cooling the phosphor sample was reground and fired again for 2 hours at 775 °C. Both firings were in nitrogen-hydrogen (99/5 by volume) atmosphere.

Finally the phosphor having the following empirical formula : $Ba_{5-n}(Ge_vSi_w)O_4Br_6:Eu_n^{2+}$, wherein n is 0.015, v is 0.15, and w is 0.85 was ground to obtain phosphor particles ready for incorporation into a radiographic screen for use in digital computed radiography. For the obtained results reference is made to Table A.

EXAMPLE 10

Example 9 was repeated but with the type of silica identified under No. 10 in the Table.

After the firings a phosphor having the same empirical formula as in Example 9 was obtained. The obtained phosphor particles were incorporated in a radiographic screen for use in digital computed radiography. For the obtained results reference is made to Table A.

EXAMPLE 11

8.9141 g of solid barium bromide was dissolved in 9 ml of water, and 3.9490 g of coprecipitated Ba,Eu-carbonate were added to the solution, the atom ratio of Ba/Eu in the carbonate being 0.9925/0.0075.

0.3138 g of $GeO_2$ and 1.15 ml of a 30 % by weight aqueous silica dispersion wherein the silica particles have the tabulated (see Table A) average particle size (A.P.S.) in nm and surface area (S.A.) in $m^2/g$ were introduced to form a sol. After mixing for one hour in a pearl-mill sufficient 10 wt % hydrochloric acid was added to the suspension to lower the pH to 5. The suspension was than stirred for several hours at 65 °C and the liquid allowed to form a gel.

The gel was dried for about 2 hours at 130 °C in a ventilated drying oven, ground and fired at 450 °C for 2 hours, then the temperature was increased to 775 °C and held at that temperature for 2 additional hours. After cooling the phosphor sample was reground and fired again for 2 hours at 775 °C. Both firings were in nitrogen-hydrogen (99/5 by volume) atmosphere.

Finally the phosphor having the following empirical formula : $Ba_{5-n}(Ge_vSi_w)O_4Br_6:Eu_n^{2+}$, wherein n is 0.015, v is 0.30, and w is 0.70 was ground to obtain phosphor particles ready for incorporation into a radiographic screen for use in digital computed radiography. For the obtained results reference is made to Table A.

EXAMPLE 12

8.9141 g of solid barium bromide was dissolved in 9 ml of water, and 3.9490 g of coprecipitated Ba,Eu-carbonate were added to the solution, the atom ratio of Ba/Eu in the carbonate being 0.9925/0.0075

0.4706 g of $GeO_2$ and 0.91 ml of a 30 % by weight aqueous silica dispersion wherein the silica particles have the tabulated (see Table A) average particle size (A.P.S.) in nm and surface area (S.A.) in $m^2/g$ were introduced to form a sol. After mixing for one hour in a pearl-mill sufficient 10 wt % hydrochloric acid was added to the suspension to lower the pH to 5. The suspension was than stirred for several hours at 65 °C and the liquid allowed to form a gel.

The gel was dried for about 2 hours at 130 °C in a ventilated drying oven, ground and fired at 450 °C for 2 hours, then the temperature was increased to 775 °C and held at that temperature for 2 additional hours. After cooling the phosphor sample was reground and fired again for 2 hours at 775 °C. Both firings were in nitrogen-hydrogen (99/5 by volume) atmosphere.

Finally the phosphor having the following empirical formula : $Ba_{5-n}(Ge_vSi_w)O_4Br_6:Eu_n^{2+}$, wherein n is 0.015, v is 0.45, and w is 0.55 was ground to obtain phosphor particles ready for incorporation into a radiographic screen for use in digital computed radiography. For the obtained results reference is made to Table A.

EXAMPLE 13

8.9141 g of solid barium bromide was dissolved in 9 ml of water, and 3.9490 g of coprecipitated Ba,Eu-carbonate were added to the solution, the atom ratio of Ba/Eu in the carbonate being 0.9925/0.0075

0.4706 g of $GeO_2$ and 0.91 ml of a 30 % by weight aqueous silica dispersion wherein the silica particles have the tabulated (see Table average particle size (A.P.S.) in nm and surface area (S.A.) in $m^2/g$ were intro-

duced to form a sol. After mixing for one hour in a pearl-mill sufficient 10 wt % hydrochloric acid was added to the suspension to lower the pH to 5. The suspension was than stirred for several hours at 65 °C and the liquid allowed to form a gel.

The gel was dried for about 2 hours at 130 °C in a ventilated drying oven, ground and fired at 450 °C for 2 hours, then the temperature was increased to 775 °C and held at that temperature for 2 additional hours. After cooling the phosphor sample was reground and fired again for 2 hours at 775 °C. Both firings were in nitrogen-hydrogen (99/5 by volume) atmosphere.

Finally the phosphor having the following empirical formula $Ba_{5-n}(Ge_vSi_w)O_4Br_6:Eu_n^{2+}$, wherein n is 0.015, v is 0.45, and w is 0.55 was ground to obtain phosphor particles ready for incorporation into a radiographic screen for use in digital computed radiography. For the obtained results reference is made to Table A.

EXAMPLE 14

Example 13 was repeated but with the type of silica identified under No. 14 in the Table.

After the firings a phosphor having the same empirical formula as in Example 13 was obtained. The obtained phosphor particles were incorporated in a radiographic screen for use in digital computed radiography. For the obtained results reference is made to Table A.

EXAMPLE 15

8.9141 g of solid barium bromide was dissolved in 9 ml of water, and 3.9490 g of coprecipitated Ba,Eu-carbonate were added to the solution, the atom ratio of Ba/Eu in the carbonate being 0.9925/0.0075.

1.48 ml of tetramethyl silicate were introduced to form a sol. After mixing for one hour in a pearl-mill sufficient 10 wt % hydrochloric acid was added to the suspension to lower the pH to 5. The suspension was than stirred for several hours at 65 °C and the liquid allowed to form in situ a $SiO_2$ containing gel by hydrolysis of the tetramethyl silicate .

The gel was dried for about 2 hours at 130 °C in a ventilated drying oven, ground and fired at 450 °C for 2 hours, then the temperature was increased to 775 °C and held at that temperature for 2 additional hours. After cooling the phosphor sample was reground and fired again for 2 hours at 775 °C. Both firings were in nitrogen-hydrogen (99/5 by volume) atmosphere.

Finally the phosphor having the following empirical formula : $B_{5-n}(Ge_vSi_w)O_4Br_6:Eu_n^{2+}$, wherein n is 0.015, v is 0, and w is 1 was ground to obtain phosphor particles ready for incorporation into a radiographic screen for use in digital computed radiography. For the obtained results reference is made to Table A.

EXAMPLE 16

8.9141 g of solid barium bromide was dissolved in 9 ml of water, and 3.9490 g of coprecipitated Ba,Eu-carbonate were added to the solution, the atom ratio of Ba/Eu in the carbonate being 0.9925/0.0075.

0.1569 g of $GeO_2$ and 1.25 ml of tetramethyl silicate were introduced to form a sol. After mixing for one hour in a pearl-mill sufficient 10 wt % hydrochloric acid was added to the suspension to lower the pH to 5. The suspension was than stirred for several hours at 65 °C and the liquid allowed to form in situ a $SiO_2$ containing gel by hydrolysis of the tetramethyl silicate .

The gel was dried for about 2 hours at 130 °C in a ventilated drying oven, ground and fired at 450 °C for 2 hours, then the temperature was increased to 775 °C and held at that temperature for 2 additional hours. After cooling the phosphor sample was reground and fired again for 2 hours at 775 °C. Both firings were in nitrogen-hydrogen (99/5 by volume) atmosphere.

Finally the phosphor having the following empirical formula : $Ba_{5-n}(Ge_vSi_w)O_4Br_6:Eu_n^{2+}$, wherein n is 0.015, v is 0.15, and w is 0.85 was ground to obtain phosphor particles ready for incorporation into a radiographic screen for use in digital computed radiography. For the obtained results reference is made to Table A.

EXAMPLE 17

8.9141 g of solid barium bromide was dissolved in 9 ml of water, and 3.9490 g of coprecipitated Ba,Eu-carbonate were added to the solution, the atom ratio of Ba/Eu in the carbonate being 0.8925/0.0075.

0.4706 g of $GeO_2$ and 0.81 ml of tetramethyl silicate were introduced to form a sol. After mixing for one hour in a pearl-mill sufficient 10 wt % hydrochloric acid was added to the suspension to lower the pH to 5. The suspension was than stirred for several hours at 65 °C and the liquid allowed to form in situ a $SiO_2$ containing gel by hydrolysis of the tetramethyl silicate .

The gel was dried for about 2 hours at 130 °C in a ventilated drying oven, ground and fired at 450 °C for 2 hours, then the temperature was increased to 775 °C and held at that temperature for 2 additional hours. After cooling the phosphor sample was reground and fired again for 2 hours at 775 °C. Both firings were in nitrogen-hydrogen (99/5 by volume) atmosphere.

Finally the phosphor having the following empirical formula : $Ba_{5-n}(Ge_vSi_w)O_4Br_6:Eu_n^{2+}$, wherein n is 0.015, v is 0.45, and w is 0.55 was ground to obtain phosphor particles ready for incorporation into a radiographic screen for use in digital computed radiography. For the obtained results reference is made to Table A.

## EXAMPLE 18

8.9141 g of solid barium bromide was dissolved in 9 ml of water, and 3.9490 g of coprecipitated Ba,Eu-carbonate were added to the solution, the atom ratio of Ba/Eu in the carbonate being 0.9925/0.0075.

0.6275 g of $GeO_2$ and 0.59 ml of tetramethyl silicate were introduced to form a sol. After mixing for one hour in a pearl-mill sufficient 10 wt % hydrochloric acid was added to the suspension to lower the pH to 5. The suspension was than stirred for several hours at 65 °C and the liquid allowed to form in situ a $SiO_2$ containing gel by hydrolysis of the tetramethyl silicate .

The gel was dried for about 2 hours at 130 °C in a ventilated drying oven, ground and fired at 450 °C for 2 hours, then the temperature was increased to 775 °C and held at that temperature for 2 additional hours. After cooling the phosphor sample was reground and fired again for 2 hours at 775 °C. Both firings were in nitrogen-hydrogen (99/5 by volume) atmosphere.

Finally the phosphor having the following empirical formula : $Ba_{5-n}(Ge_vSi_w)O_4Br_6:Eu_n^{2+}$, wherein n is 0.015, v is 0.60, and w is 0.40 was ground to obtain phosphor particles ready for incorporation into a radiographic screen for use in digital computed radiography. For the obtained results reference is made to Table A.

TABLE A

| Phosphor of Example No. | C.E.1 | C.E.2 | S.E. | C.E.2/S.E. | wt % SiO2 in sol | A.P.S. nm | S.A. m2/g |
|---|---|---|---|---|---|---|---|
| 1 | 1.9 | 3.9 | 85 | 0.05 | 14.5 | 5 | 600 |
|  | 0.9 | 2.7 | 84 | 0.03 | 30.0 | 8 | 375 |
|  | 0.04 | 0.1 | 2.4 | 0.04 | 40.0 | 15 | 200 |
|  | 0.003 | 0.02 | 2.4 | 0.01 | 30.0 | 50–70 | 40–60 |
| 2 | 0.9 | 2.7 | 49 | 0.06 | 14.5 | 5 | 600 |
|  | 1.2 | 3.0 | 51 | 0.06 | 30.0 | 8 | 375 |
|  | 2.5 | 7.3 | 53 | 0.14 | 40.0 | 15 | 200 |
|  | 1.4 | 3.1 | 45 | 0.07 | 50.0 | 50–70 | 40–60 |
| 3 | 1.6 | 5.9 | 32 | 0.18 | 14.5 | 5 | 600 |
|  | 1.3 | 4.1 | 40 | 0.10 | 30.0 | 8 | 375 |
|  | 1.7 | 5.5 | 39 | 0.14 | 40.0 | 15 | 200 |
|  | 1.5 | 5.4 | 43 | 0.13 | 50.0 | 50–70 | 40–60 |
| 4 | 7.02 | 7.5 | 135 | 0.05 | 30 | 15 | 300 |

| | | | | | | | |
|---|---|---|---|---|---|---|---|
| 5 | 1.69 | 5.5 | 44.9 | 0.12 | 30 | 8 | 375 |
| 6 | 2.30 | 6.1 | 57.7 | 0.11 | 30 | 15 | 300 |
| 7 | 2.08 | 3.9 | 60.0 | 0.06 | 30 | 8 | 375 |
| 8 | 2.79 | 8.20 | 54.5 | 0.14 | 14.5 | 5 | 600 |
| 9 | 2.79 | 9.10 | 50.7 | 0.18 | 14.5 | 5 | 600 |
| 10 | 3.47 | 7.40 | 59.4 | 0.13 | 30 | 8 | 375 |
| 11 | 2.3 | 6.50 | 46.5 | 0.14 | 30 | 8 | 375 |
| 12 | 1.69 | 5.20 | 44.3 | 0.12 | 30 | 15 | 300 |
| 13 | 2.96 | 13.0 | 50.0 | 0.26 | 30 | 8 | 300 |
| 14 | 2.20 | 6.80 | 54.2 | 0.10 | 30 | 15 | 300 |
| 15 | 2.49 | 7.10 | 62.8 | 0.11 | 40 | – | – |
| 16 | 1.68 | 4.50 | 53.3 | 0.08 | 40 | – | – |
| 17 | 0.87 | 2.80 | 34.5 | 0.08 | 40 | – | – |
| 18 | 1.29 | 4.10 | 36.4 | 0.14 | 40 | – | – |

## Claims

1. Method for the preparation of a silicate or mixed silicate-germanate, halosilicate or mixed halo(silicate-germanate) phosphor by firing a mixture of the raw materials of said phosphor, wherein prior to firing said mixture the phosphor preparation comprises the following steps (1) to (8)

(1) providing an aqueous medium,

(2) adding to said medium a host metal selected from the group consisting of Ca, Sr, Ba, Mg, Cd, Zn and Pb in at least one chemical structure selected from the group consisting of an oxide, hydroxide and a salt that decomposes into the corresponding metal oxide on heating, and when preparing a halosilicate or mixed halo(silicate-germanate) at least partly in the form of a halide,

(3) adding to said medium at least one activator metal in at least one chemical structure selected from the group consisting of a halide, oxide, hydroxide and a salt that decomposes into the corresponding metal oxide on heating, said activator metal doping said phosphor with at least one member selected from the group consisting of $Eu^{2+}$ and $Ce^{3+}$,

(4) adding to said medium colloidal silica in the form of a sol or forming in said aqueous medium a sol,

(5) intimately mixing the ingredients of steps (2), (3) and (4) in said aqueous medium,

(6) coagulating the sol including the mixed ingredients to form a gel by lowering the pH,

(7) drying the gel to form a dessicated product called xerogel,

(8) finely dividing the xerogel, and firing said xerogel to obtain a phosphor mass that after cooling is ground to form particulate phosphor material.

2. Method according to claim 1, wherein when preparing a halosilicate or mixed halo(silicate-germanate) in step (6) the pH is lowered with a hydrogen halide acid of which the halide ion is allowed to make part of the phosphor structure.

3. Method according to claim 1, wherein in said sol the colloidal silica has an average particle size smaller than 70 nm and a specific surface area of at least 40 $m^2$/g.

4. Method according to claim 1, wherein the colloidal silica is prepared in situ in the phosphor ingredient mixture by hydrolysis of a silicate ester.

5. Method according to any of the preceding claims, wherein the drying to form a xerogel proceeds in a temperature range of 110 to 140 °C.

6. Method according to any of the preceding claims, wherein the firing of the phosphor ingredients in the xerogel state proceeds in two stages; in a first stage in a temperature range of 400-500 °C and in a second stage in a temperature range of 700-800 °C.

7. Method according to any of the preceding claims, wherein the firing proceeds in a reducing gas atmosphere.

8. Method according to claim 7, wherein the firing proceeds under under a nitrogen-hydrogen atmosphere containing hydrogen in an amount of 0.2 to 5% by volume.

9. Method according to any of the preceding claims, wherein said host metal compound(s) with said activator metal compound(s) are pre-mixed by coprecipitating them beforehand as carbonates before addition in step (2) to the aqueous medium.

**Patentansprüche**

1. Ein Herstellungsverfahren für einen Silikat- oder Mischsilikat/germanat-, Halogensilikat- oder Mischhalogensilikat/germanat-Leuchtstoff, nach dem ein Gemisch aus den Leuchtstoffrohstoffen geglüht wird, dadurch gekennzeichnet, daß das Herstellungsverfahren vor dem Glühen dieses Gemisches die folgenden Schritte (1) bis (8) umfaßt :

(1) man verschafft ein wäßriges Medium,

(2) man gibt diesem Medium ein Wirtsmetall zu aus der Gruppe von Ca, Sr, Ba, Mg, Cd, Zn und Pb in wenigstens einer chemischen Struktur aus der Gruppe von einem Oxid. einem Hydroxid und einem Salz, das sich beim Erwärmen in das entsprechende Metalloxid zersetzt, und für die Herstellung eines Halogensilikats oder Mischhalogensilikats/germanats wenigstens teilweise in der Form eines Halogenids,

(3) man gibt diesem Medium wenigstens ein Aktivatormetall zu in wenigstens einer chemischen Struktur aus der Gruppe von einem Halogenid, einem Oxid, einem Hydroxid und einem Salz, das sich beim Erwärmen in das entsprechende Metalloxid zersetzt, wobei das Aktivatormetall diesen Leuchtstoff mit $Eu^{2+}$ und/oder $Ce^{3+}$ dotiert,

(4) man gibt diesem Medium kolloidale Kieselerde zu, welche die Form eines Sols hat oder die in diesem wäßrigen Medium ein Sol bildet,

(5) man vermischt die Ingredienzien der Schritte (2), (3) und (4) innig in diesem wäßrigen Medium,

(6) man koaguliert das Sol einschließlich der vermischten Ingredienzien durch das Absenken des pH-Wertes, so daß ein Gel gebildet wird,

(7) man trocknet das Gel, so daß ein Trockenprodukt, Xerogel genannt, gebildet wird,

(8) man verteilt das Xerogel fein und glüht es, so daß eine Leuchtstoffmasse erhalten wird, die nach dem Abkühlen gemahlen wird, so daß aus Teilchen bestehendes Leuchtstoffmaterial entsteht.

**2.** Ein Verfahren nach Anspruch 1, dadurch gekennzeichnet, daß beim Herstellen eines Halogensilikats oder eines Mischhalogensilikats/germanats im Schritt (6) der pH-Wert abgesenkt wird durch eine Halogenwasserstoffsäure, deren Halogenid-Ion in die Leuchtstoffstruktur miteinbezogen wird.

**3.** Ein Verfahren nach Anspruch 1, dadurch gekennzeichnet, daß die kolloidale Kieselerde im Sol eine durchschnittliche Teilchengröße kleiner als 70 nm und eine spezifische Oberfläche von wenigstens 40 m²/g hat.

**4.** Ein Verfahren nach Anspruch 1, dadurch gekennzeichnet, daß die kolloidale Kieselerde in situ in dem Leuchtstoffingredienzien-Gemisch durch Hydrolyse eines Silikatesters angesetzt wird.

**5.** Ein Verfahren nach irgendeinem der vorigen Ansprüche, dadurch gekennzeichnet, daß das Trocknen zur Bildung des Xerogels in einem Temperaturbereich von 110 bis 140 °C erfolgt.

**6.** Ein Verfahren nach irgendeinem der vorigen Ansprüche, dadurch gekennzeichnet, daß das Glühen der Leuchtstoffingredienzien im XerogelZustand in zwei Stufen erfolgt : in der ersten Stufe in einem Temperaturbereich von 400-500 °C und in der zweiten Stufe in einem Temperaturbereich von 700-800 °C.

**7.** Ein Verfahren nach irgendeinem der vorigen Ansprüche, dadurch gekennzeichnet, daß das Glühen unter der Atmosphäre eines Reduktionsgases erfolgt.

**8.** Ein Verfahren nach Anspruch 7, dadurch gekennzeichnet, daß das Glühen in einer Stickstoff/Wasserstoff-Atmosphäre, die 0,2 bis 5 Vol.-% Wasserstoff enthält, erfolgt.

**9.** Ein Verfahren nach irgendeinem der vorigen Ansprüche, dadurch gekennzeichnet, daß die Wirtsmetallverbindung(en) und die Aktivatormetallverbindung(en) vorgemischt werden, indem man sie im voraus als Carbonate mitfällt, bevor sie im Schritt (2) dem wäßrigen Medium zugegeben werden.

## Revendications

**1.** Un procédé pour la préparation d'un luminophore de silicate ou de silicate/germanate mixte, d'halosilicate ou d'halosilicate/germanate mixte qui consiste à calciner un mélange des matières premières de ce luminophore, caractérisé en ce qu'avant la calcination de ce mélange, la préparation du luminophore parcourt les étapes de (1) à (8) suivantes :

(1) on procure un milieu aqueux,

(2) on y ajoute un métal hôte sélectionné parmi le groupe constitué de Ca, Sr, Ba, Mg, Cd. Zn et Pb dans au moins une structure chimique sélectionnée parmi le groupe constitué d'un oxyde, d'un hydroxyde et d'un sel qui se décompose dans l'oxyde métallique correspondant lors du chauffage, et dans le cas où l'on prépare un halosilicate ou un halosilicate/germanate mixte au moins partiellement sous la forme d'un halogénure,

(3) on ajoute à ce milieu au moins un métal activateur dans au moins une structure chimique sélectionnée parmi le groupe constitué d'un halogénure, d'un oxyde, d'un hydroxyde et d'un sel qui se décompose dans l'oxyde métallique correspondant lors du chauffage, où ce métal activateur dote le luminophore à l'Eu²⁺ et/ou au Ce³⁺,

(4) on ajoute à ce milieu de la silice colloïdale sous la forme d'un sol ou qui forme un sol dans ce milieu aqueux:

(5) on mélange intimement les ingrédients des étapes (2). (3) et (4) dans ce milieu aqueux,

(6) on coagule le sol contenant les ingrédients mélangés, afin de produire un gel. en baissant le pH,

(7) on sèche le gel, afin de produire un produit desséché appelé xérogel,

(8) on divise finement ce xérogel et on le calcine, afin d'obtenir une masse au luminophore qui est broyée après le refroidissement, afin de former un matériau particulaire au luminophore.

**2.** Procédé suivant la revendication 1. caractérisé en ce que, dans le cas où l'on prépare un halosilicate ou un halosilicate/germanate mixte, le pH est baissé lors de l'étape (6) à l'aide d'un haloacide dont on laisse l'ion halogénure faire partie de la structure du luminophore.

**3.** Procédé suivant la revendication 1, caractérisé en ce que la silice colloïdale dans ce sol présente une taille moyenne des particules inférieure à 70 nm et une aire de surface spécifique d'au moins 40 m²/g.

EP 0 415 469 B1

4. Procédé suivant la revendication 1, caractérisé en ce que la silice colloïdale est préparée in situ dans le mélange des ingrédients du luminophore par l'hydrolyse d'un ester de silicate.

5. Procédé suivant l'une quelconque des revendications précédentes. caractérisé en ce que le séchage, afin de produire un xérogel. s'effectue dans l'intervalle des températures de 110 à 140 °C.

6. Procédé suivant l'une quelconque des revendications précédentes, caractérisé en ce que la calcination des ingrédients du luminophore dans l'état de xérogel s'effectue par deux étapes : la première dans l'intervalle des températures de 400-500 °C et la deuxième dans l'intervalle des températures de 700-800 °C.

7. Procédé suivant l'une quelconque des revendications précédentes, caractérisé en ce que la calcination s'effectue sous l'atmosphère d'un gaz réducteur.

8. Procédé suivant la revendication 7, caractérisé en ce que la calcination s'effectue sous une atmosphère d'azote et d'hydrogène qui contient une quantité d'hydrogène de 0,2 à 5 % en volume.

9. Procédé suivant l'une quelconque des revendications précédentes, caractérisé en ce que la combinaison (les combinaisons) du métal hôte et la combinaison (les combinaisons) du métal activateur sont pré-mélangées par leur coprécipitation préliminaire sous forme de carbonates avant leur ajout au milieu aqueux lors de l'étape (2).